# EUROPEAN PATENT APPLICATION

(11) **EP 4 813 637 A2**
(43) Date of publication of application: **30.09.2026**
(21) Application number: 26191600.1
(22) Date of filing: 28.03.2025
(51) Int. Cl.: B33Y 80/00

(54) **UNDERWATER SHEET PILE ASSEMBLY WITH ATTACHED ADDITIVE MANUFACTURING STRUCTURE FOR FORMING AN ARTIFICIAL REEF, ADDITIVE MANUFACTURING STRUCTURE FOR ATTACHMENT TO UNDERWATER SHEET PILE, AND METHOD OF ATTACHMENT**

(30) Priority: 04.04.2024 EP 24168415
(62) Document number(s) of the earlier application(s) in accordance with Art. 76 EPC: 25167078.2 / 4 644 609
(71) Applicant: Stonereefs A/S, 7330 Brande (DK)
(72) Inventor: Dam, Mikkel Brich, 7330 Brande (DK)
(74) Representative: Nordic Patent Service A/S

(57) **Abstract**

An underwater sheet-pile assembly for forming an artificial reef comprises one or more underwater sheet piles (200) having an indentation (250), a structure (100) arranged at least partly in the indentation (250), and attachment means (300) comprising a mounting bracket (500) attaching the structure (100) to the sheet piles (200). At least a portion of the structure (100) is made of stone material, such as concrete, clay and/or cement, and at least a portion is additively manufactured. The mounting bracket (500) holds the structure (100) such that a cavity (600) is provided behind the structure (100), between the structure (100) and the sheet piles (200) and/or between the mounting bracket (500) and the sheet piles (200). The structure (100) has a cross-section varying throughout its length (L) and comprises cavities (400) open-ended (450) at a top (210) and/or bottom (220). A method of attaching the structure (100) is also disclosed.

## Description

### FIELD OF THE INVENTION

The present invention relates to underwater structures and marine engineering, specifically to an assembly of an underwater sheet pile and an attached structure for forming an artificial reef for ecological enhancement and hydrodynamic optimization. The invention further relates to structures designed for attachment to underwater sheet piles, manufactured using additive manufacturing techniques and composed at least partially of stone materials such as concrete, clay, or cement. Additionally, the invention concerns a method for attaching such structures to underwater sheet piles, utilizing attachment means. The invention is applicable in coastal protection, erosion control, marine habitat restoration, and artificial reef construction, particularly for improving biodiversity, sediment retention, and structural reinforcement of underwater barriers.

### BACKGROUND

The aquatic biodiversity is decreasing in the waters of the entire world, and in some underwater areas, the biodiversity is more or less extinct and died out due to destructive pollution, such as humanmade pollution, and negligence of the vital aquatic life.

The diversity of aquatic life is extremely important for the life underwater as well as the life over the water surface, so the world calls for optimized solutions within the marine biodiversity if an acceptable and necessary biodiversity should be obtained and/or restored in the aquatic area.

Therefore, a sustainable, biodiversity-improving improving and easily manufacturable solution is a necessity and is highly desired.

Thus, there is a need to counteract the negative consequences (loss of habitat) that occur when establishing maritime infrastructure projects, such as harbors, bridges, tunnels, offshore wind, etc.

Today, some biodiversity improving solutions are known and available, however, the effect and the accessibility of the solutions are not optimal relative to the high demand and immediate need.

US20220372721A1 discloses portable and interchangeable marine tiles and marine pods for containing and growing marine organisms, such as coral. The marine tiles typically have a first face with a 3D pattern and a second face and may contain sites for supporting marine organisms. The tiles can be attached to artificial supporting substrates like bridge piles or jetty piles, either individually or in clustered patterns. The marine pods are dismountable and transportable units designed to quickly create underwater substrates for growing marine organisms. The pods have a first panel with a first slit and a second panel with a second slit that can interlock by sliding the slits together.

Hence, an improved underwater biodiversity solution, preferably an efficient and reliable solution, would be advantageous, and in particular, a more resistant, economical, sustainable solution with longevity would be advantageous.

### SUMMARY

An object of the present invention is to provide a solution, such as an underwater sheet-pile assembly and a method, that solves or at least mitigates the above-mentioned problems by providing a solution for improving underwater biodiversity.

In particular, it may be seen as an object of the present invention to provide an efficient, reliable and durable artificial reef solution for use with underwater sheet piles, preferably a solution that can be installed on existing underwater sheet piles and that provides protected areas for underwater cultures.

According to a first aspect, there is provided an underwater sheet-pile assembly for forming an artificial reef, the assembly comprising:
one or more underwater sheet piles, the one or more underwater sheet piles comprising an indentation;
a structure arranged at least partly in the indentation; and
one or more attachment means comprising at least one mounting bracket, the at least one mounting bracket attaching the structure to the one or more underwater sheet piles,
wherein at least a portion of the structure is made of a stone material, such as concrete, clay and/or cement,
wherein at least a portion of the structure is additively manufactured,
wherein the at least one mounting bracket holds the structure relative to the one or more underwater sheet piles such that, when mounted, a cavity is provided behind the structure,
wherein the cavity is provided between the structure and the one or more underwater sheet piles and/or between the at least one mounting bracket and the one or more underwater sheet piles,
wherein the structure has a length and a cross-section varying throughout the length of the structure, and
wherein the structure has a cross-section comprising a plurality of cavities, the cavities being open-ended at least in a top and/or a bottom of the structure.

The first aspect is particularly, but not exclusively, advantageous for providing an underwater sheet-pile assembly in which the structure forms an artificial reef while being arranged at least partly in an indentation of one or more underwater sheet piles. The additive manufacturing of the structure allows the structure to be manufactured with complex shapes, varying cross-sections and cavities, thereby providing protected areas for underwater cultures.

The provision of the cavity behind the structure is particularly, but not exclusively, advantageous for providing additional protected space between the structure and the one or more underwater sheet piles, and/or between the at least one mounting bracket and the one or more underwater sheet piles. This may improve the ecological functionality of the assembly while allowing the structure to be held by the at least one mounting bracket.

In a possible implementation form of the first aspect, the indentation is a notch, groove, recess or hollow area formed by the one or more underwater sheet piles.

In a possible implementation form of the first aspect, the one or more underwater sheet piles comprise array-connected underwater sheet piles, and the indentation is formed by the array-connected underwater sheet piles.

In a possible implementation form of the first aspect, the at least one mounting bracket is adapted for being releasably attached to the structure and/or for being releasably attached to the one or more underwater sheet piles.

In a possible implementation form of the first aspect, the at least one mounting bracket is adapted for mounting the structure in an angled position relative to the one or more underwater sheet piles.

In a possible implementation form of the first aspect, the at least one mounting bracket, when being mounted, provides a push force against a lower attachment point and a pull force from an upper attachment point.

In a possible implementation form of the first aspect, the plurality of cavities comprises cavities having mutually different sizes and/or mutually different positions within the structure.

In a possible implementation form of the first aspect, the cavities are configured to allow underwater cultures to enter and exit areas in the structure.

In a possible implementation form of the first aspect, the structure comprises a rough texture and/or undulating layering formed by additive manufacturing.

In a possible implementation form of the first aspect, the structure is inoculated and/or at least partly coated with algae and/or any other marine organism.

In a possible implementation form of the first aspect, the underwater sheet-pile assembly comprises a plurality of structures attached to one or more underwater sheet piles, wherein at least two of the plurality of structures have mutually different forms, shapes, proportions and/or dimensions.

The plurality of structures may thereby provide a varied artificial reef environment along the one or more underwater sheet piles, which may be advantageous for providing different protected areas for different underwater cultures.

According to a second aspect, there is provided a method for attaching a structure to one or more underwater sheet piles for forming an artificial reef, the method comprising:
providing the structure,
wherein at least a portion of the structure is made of a stone material, such as concrete, clay and/or cement,
wherein at least a portion of the structure is additively manufactured,
wherein the structure has a length and a cross-section varying throughout the length of the structure, and
wherein the structure has a cross-section comprising a plurality of cavities, the cavities being open-ended at least in a top and/or a bottom of the structure;
providing at least one mounting bracket;
positioning the at least one mounting bracket in an indentation of the one or more underwater sheet piles;
attaching the at least one mounting bracket to the one or more underwater sheet piles;
attaching the structure to the at least one mounting bracket; and
arranging the structure by means of the at least one mounting bracket such that, when mounted, a cavity is provided behind the structure,
wherein the cavity is provided between the structure and the one or more underwater sheet piles and/or between the at least one mounting bracket and the one or more underwater sheet piles.

The second aspect is particularly, but not exclusively, advantageous for providing an efficient method of installing an artificial reef structure on one or more underwater sheet piles. The method allows the structure to be arranged by means of the at least one mounting bracket such that the cavity is provided behind the structure, while the structure itself provides a stone-material, additively manufactured artificial reef having a varying cross-section and open-ended cavities.

In a possible implementation form of the second aspect, the indentation is an indentation of a plurality of connected underwater sheet piles.

In a possible implementation form of the second aspect, the at least one mounting bracket is positioned and/or configured such that the structure is mounted in an angled position relative to the one or more underwater sheet piles.

In a possible implementation form of the second aspect, the at least one mounting bracket, when being mounted, provides a push force against a lower attachment point and a pull force from an upper attachment point.

In a possible implementation form of the second aspect, the method further comprises installing a plurality of structures on one or more underwater sheet piles, wherein at least two of the plurality of structures have mutually different forms, shapes, proportions and/or dimensions.

In a possible implementation form of the second aspect, the method further comprises inoculating and/or at least partly coating at least one of the plurality of structures with algae and/or any other marine organism.

In a possible implementation form of the second aspect, the steps of the method may be executed in any order and/or executed at least partly simultaneously, where technically possible.

Embodiments and implementation forms described in relation to the first aspect may also be applicable to the second aspect, and embodiments and implementation forms described in relation to the second aspect may also be applicable to the first aspect, unless technically impossible.

The first and second aspects of the present invention may each be combined with any one or more of the other aspects and implementation forms disclosed herein. These and other aspects of the invention will be apparent from and elucidated with reference to the embodiments described hereinafter.

### SHORT DESCRIPTION OF THE DRAWINGS

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples, even if not so illustrated or if not so explicitly described.

Exemplary embodiments of the invention are described in the figures, wherein:
Figure 1 illustrates examples of a plurality of structures arranged on sheet piles.
Figure 2 illustrates a cross-section of a structure arranged on a sheet pile.
Figure 3 illustrates a cross-section of an angled mounting bracket.
Figure 4 illustrates a structure suitable for organisms.
Figures 5a, 5b, 6a,6b, 7a, 7b, 8a, 8b, 9a, 9b, 10a, 10b, 11a, 11b, 12a and 12b illustrate plurality of examples of specific embodiments of structures,
Figure 13a illustrates a front view of an embodiment of a sheet pile wall provided with structures.
Figure 13b illustrates a front view with details of a section of the sheet pile wall of Figure 13a.
Figure 13c is a top view of the sheet pile wall section and structure of Figure 13b.
Figure 14a is a variation of the embodiment of Fig 13b.
Figure 14b is a variation of the embodiment of Fig 13c.

### DETAILED DESCRIPTION

Exemplary examples will now be described more fully hereinafter with reference to the accompanying drawings. In this regard, the present examples may have different forms and should not be construed as being limited to the descriptions set forth herein. Accordingly, the examples are merely described below, by referring to the Figures, to explain aspects of the invention in detail.

Throughout the specification, when an element is referred to as being "connected" to another element, the element is "directly connected" to the other element, "electrically connected", "fluidically connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. **It** will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

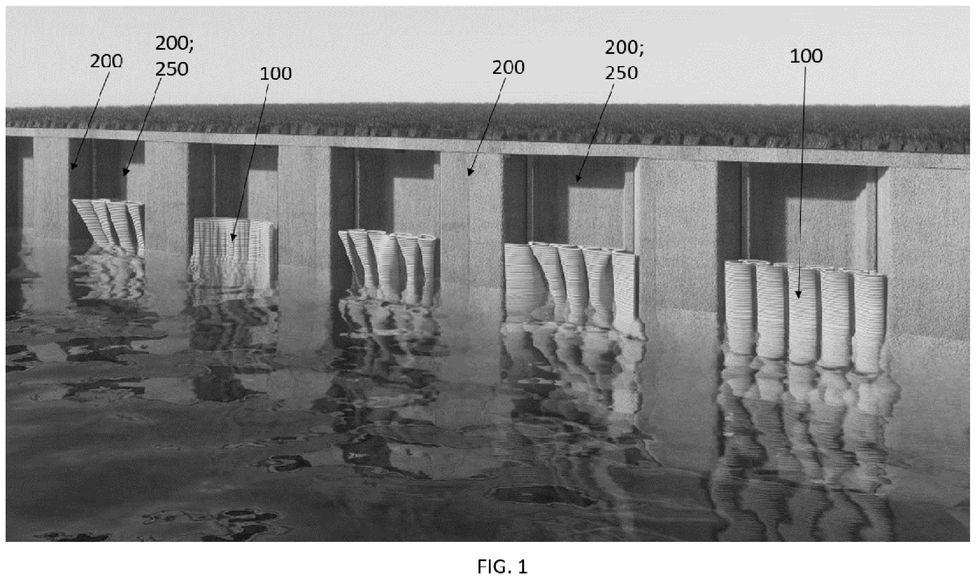

FIG. 1 illustrates examples of a plurality of structures 100 arranged on a continuous sheet pile wall formed by a row of interlocking sheet piles 200. The sheet piles 200 are according to the specifications of the European standard EN 10248, which covers hot-rolled steel sheet piles, including U-shaped and Z-shaped profiles, or EN 10249, which covers cold-formed steel sheet piles. The sheet piles can be U-shaped (as shown) or Z-shaped.

The structures 100 are shown to have various shapes and sizes, all designed to fit substantially into the longitudinally extending indentations 250 of the sheet piles 200. This arrangement demonstrates the versatility of the invention in accommodating different structural designs while maintaining a secure fit within the sheet pile system. The structures 100 are depicted at various water levels, with some fully submerged and others partially exposed, illustrating the adaptability of the system to different water depths and tidal conditions.

As illustrated, the structure 100 can take an endless range of different forms and shapes, with different proportions and dimensions made to fit at least substantially into the indentation 250 of a sheet pile 250 or a row of interlocking sheet piles 250.

The structure 100 with its one or more attachment means is shaped and sized to conform to and be arranged within the indentation 250 of the underwater sheet pile 200 or in an indentation 250 formed by a row of interlocking underwater sheet piles 200.

Preferably, the structure 100, with its attachment means, is shaped and sized to fit in the indentation 250 with a water passageway 600 formed between the structure 100 and the deepest portion of the indentation,

The structure 100 with its attachment means can be shaped and sized such that the outer surface geometry of the structure 100 corresponds at least substantially to the contour of the indentation 250, thereby enabling a complementary fit along at least a portion of the length and depth of the indentation 250.

This flexibility in design allows for customization to specific environmental needs or ecological goals.

The structures 100 may be completely covered by water or partly covered as illustrated in FIG. 1, demonstrating their suitability for various water depths and tidal zones.

The structure 100 as illustrated in FIG. 1is adapted for being attached directly or indirectly to the sheet pile 200 by attachment means. The attachment means may comprise a bracket 500, which can be made of metal, preferably a weldable metal. This allows for secure and durable attachment of the structures to the sheet piles.

The attachment means may also include at least one magnet 300, preferably two or more magnets 300. While the specific attachment is not illustrated in FIG. 1, this magnetic attachment system provides a non-invasive and easily adjustable method for securing the structures to the sheet piles.

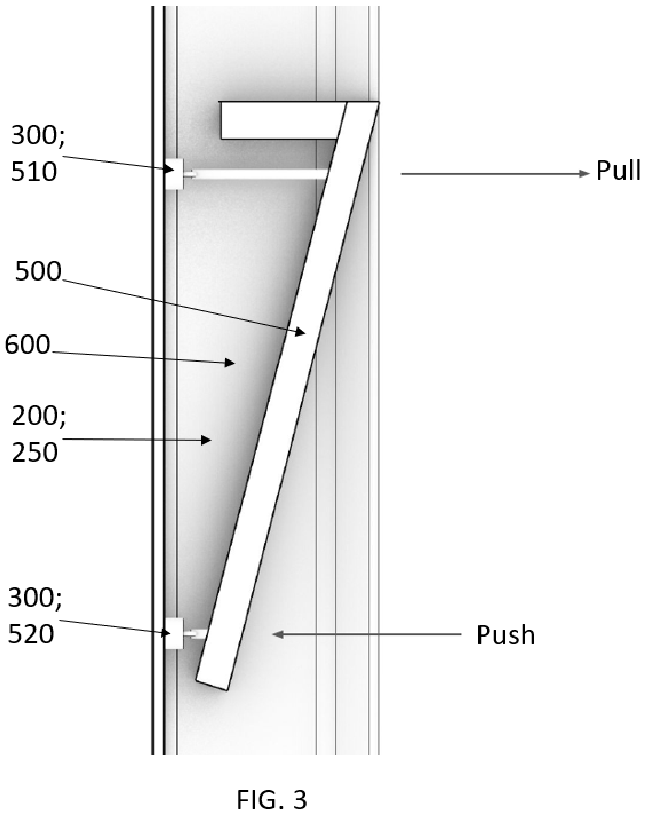

An indirect attachment via a mounting bracket 500 is illustrated in FIG. 3, which will be described in more detail later.

Within the invention, it is preferred that the attachment of one or more structures 100 to a sheet pile 200 is performed with a method comprising:
- providing an additive manufactured structure 100,
- providing at least one mounting bracket 500,
- attaching the structure 100 to the mounting bracket 500,
- positioning the mounting bracket in an indentation 250 of:
   one sheet pile 200 and/or a plurality of interconnected sheet piles 200, preferably a row of interconnected sheet piles 200, and
- optionally inoculating and/or coating at least partly the structure (100) with algae and/or any other marine organism.

The indentation is in an embodiment formed by webs 210,220,230 of the one sheet pile 200 and/or a plurality of interconnected sheet piles 200, and the method comprises comprising attaching the at least one mounting bracket 500 to one or more of the webs 210,220,230.

The steps of the method can be executed in any order and/or executed simultaneously, providing flexibility in the installation process.

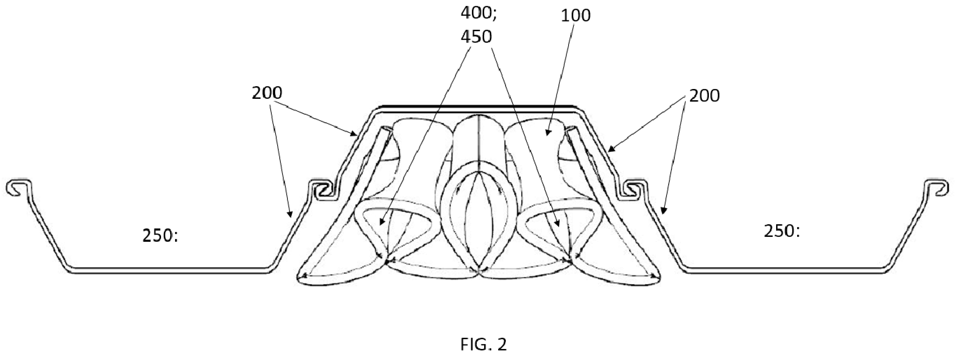

FIG. 2 illustrates a cross-section of a structure 100 arranged in an indentation 250 of an array of sheet piles 200 using attachment means. This figure provides a detailed view of how the structure fits within the sheet pile system and its internal design.

The structure 100 within the invention is intended for attachment to associated underwater sheet pile(s) 200, the structure comprising:
- one or more attachments means 300 (not shown in FIG. 2 - see FIG. 3), preferably one or more magnets 300, which provide a secure yet non-invasive attachment method,
- at least a portion made of stone material, such as concrete, clay, and/or cement, preferably the entire structure is made of stone material. This material choice ensures durability in underwater environments and provides a suitable substrate for marine life.
- at least a portion being additive manufactured, preferably the entire structure is additive manufactured, allowing for complex geometries that enhance ecological benefits.

The structure 100, together with its attachments means, is shaped and sized to fit in the indentation 250 of the underwater sheet pile 200 or in an indentation 250 formed by a row of interlocking underwater sheet piles (200), i.e. the structure with it attachment means is adapted to be arranged in the indentation 250 of the underwater sheet pile 200 or in the indentation 250 of array-connected underwater sheet piles 200, ensuring a secure fit and integration with existing infrastructure. As shown in FIG. 2, the structure 100 together with the attachment means is shaped and seized to fit in the indentation 250 with a water passageway 600 formed between the structure 100 and the deepest portion of the indentation 250. This water passageway 600 facilitates water flow and creates additional habitat space for marine organisms.

In many embodiments, the indentation 250 is formed between a bottom web 230 of a row of sheet piles 200, a first side web 210 of the row of sheet piles 200, the first side web 210 extending obliquely or perpendicularly from a first edge of the bottom web 230, and a second side web 220 of the row of sheet piles 200, the second side web 220 extending obliquely or perpendicularly from a second edge of the bottom web 230 that is opposite to the first edge. In such configurations, the attachment means connect a first lateral side of the structure 100 to the first side web 210 and the second lateral side to the second side web 220 with a water passageway 600 between the bottom web 230 and the structure 100. This arrangement maximizes the ecological benefits while ensuring secure attachment.

Throughout the figures, the structure is illustrated as being made fully of concrete and being fully 3D printed / additive manufactured. This demonstrates the potential for creating complex, customized structures using advanced manufacturing techniques.

However, it should be understood that within the invention, the entire structure does not necessarily have to be fully made of stone material or fully 3D printed. This allows for flexibility in material composition and manufacturing methods to suit specific needs or environmental conditions.

However, it is preferred that the greater part of the structure is made of stone material and, more preferably, that the entire structure is made of stone material, such as concrete. This preference is based on the durability and suitability of stone materials in marine environments.

An example of a structure not being fully made of stone material could be a structure made of approx. 90% stone material combined with a part of approx. 10% biomaterial or any other desired material. This combination could enhance certain ecological properties of the structure.

Or approx. 80% stone material and approx. 20% biomaterial or alternative material.

Or approx. 70% stone material and approx. 30% biomaterial or alternative material.

Or approx. 60% stone material and approx. 40% biomaterial or alternative material.

Or approx. 50% stone material and approx. 50% biomaterial or alternative material. These various ratios demonstrate the flexibility in material composition to achieve specific ecological or structural goals.

The stone material can comprise concrete but does not contain Portland cement but may comprise Geopolymer Cement (made from fly ash, slag, and alkaline activators) or Limestone Calcined Clay Cement (LC3) (clay and limestone to reduce the clinker content and lower carbon footprint).

Moreover, it is preferred that the greater part be 3D printed and, more preferably, the entire structure is 3D printed. This preference for additive manufacturing allows for the creation of complex geometries that can enhance ecological benefits and structural performance. Moreover, it is preferred that the structure 100 is an integrally 3D-printed body", i.e., printed in one go without separate parts, and is formed by a single-piece 3D-printed structure, i.e., it consists of only one piece. Thus, the structure 100 can be additively manufactured as a single entity, i.e., printed as one continuous object.

In an embodiment, the material that the structure is made of comprises a commercially available bioactive composite, the material displays active recruitment of microalgae. The structure 100 may be inoculated and/or at least partly coated with algae and/or any other marine organism to accelerate the ecological colonization process.

The top of the structure 100 can be clad with seashells, preferably shells of the blue mussel (Mytilus edulis) that are sourced from the food industry. This creates a more complex surface structure, and releases signal molecules that attract new colonies of blue mussels.

Furthermore, the structure 100 has an at least substantially quadrangular cross-section, and in FIG. 2 the preferred cross-section of the structure is illustrated as an at least substantially trapezial cross-section. This shape allows for optimal fitting within the indentation of the sheet pile while providing a stable base and varied surfaces for marine life.

It should be understood that within the invention, the shape of the structure would rarely be made in straight lines, so when defining a quadrangular cross-section and/or a trapezial cross-section, it should be seen as an overall shape and not as a perfect quadrangular or trapezial cross-section shape. This allows for organic, nature-inspired designs that can enhance ecological benefits.

Moreover, in FIG. 2 is illustrated a structure 100 having a cross-section comprising a plurality of cavities or channels 400. The cavities or channels 400 are open-ended 450 at least in the top 210 and/or the bottom of the structure 220 to allow for water circulation, marine life shelter, and sediment flow. These cavities and openings play a crucial role in enhancing the ecological value of the structure by providing diverse habitats and promoting water movement.

Also, the structure illustrated in FIG. 2 has a cross-section varying throughout the length of the structure 100. This variation in cross-section allows for diverse surface textures and habitats along the length of the structure, enhancing its ecological value.

FIG. 3 illustrates a cross-section of an angled mounting bracket 500. This figure provides detailed insight into the attachment mechanism of the structure to the sheet pile.

It should be understood that the shape and dimension of the mounting bracket 500 should not be seen as a limitation of the invention. The bracket can be customized to suit different structure designs and sheet pile configurations.

Furthermore, it should be understood that the angled mounting bracket 500 is one embodiment of a bracket; however, within the invention, the mounting bracket 500 can be angled, such that a structure is arranged angled in an indentation 250 of one or more sheet pile(s) 200, or the mounting bracket 500 can be non-angled, such that a structure 100 is arranged at least substantially vertical in an indentation 250 of one or more sheet pile(s) 200. This flexibility in bracket design allows for optimal positioning of the structure relative to water flow and light exposure.

Also, it should be understood that within the invention, it is preferred to mount/position/arrange/fixate/attach the structure 100 to the one or more sheet piles 200 via a mounting bracket 500: however, it is also possible to attach the structure 100 directly on the one or more sheet piles 200 with attachments means 300, such as magnets 300. This versatility in attachment methods allows for adaptation to different installation scenarios and environmental conditions.

The preferred attachment means within the invention is magnets; however, it should be understood that other attachment means 300 may also be used. Magnetic attachment provides a non-invasive, easily adjustable method of securing the structures.

In FIG. 3 the mounting bracket 500 is adapted for being releasably attached to the structure 100, and/or the mounting bracket 500 is adapted for being releasably attached to the sheet pile(s) 200, as the mounting bracket 500 of the invention comprises at least one magnet 300, preferably two or more magnets, adapted for attaching the mounting bracket 500 to the sheet pile 200. **In** FIG. 3 the mounting bracket 500 is illustrated with two magnets 300 for attaching the bracket 500 to the sheet pile 200. This releasable attachment system allows for easy installation, removal, and repositioning of structures as needed.

As illustrated with arrows in FIG. 3, the mounting bracket 500 is in one embodiment of the invention arranged to provide a push force against at a lower attachment point 520 and a pull force from an upper attachment point 510. This arrangement ensures a secure attachment that can withstand various underwater forces.

**In** FIG. 3, the structure 100 is mounted on sheet pile(s) 200 provides a rear cavity 600 behind the structure between the mounting bracket 500 and the sheet pile(s) 200. This rear cavity can serve as additional habitat space for marine life and contribute to water circulation patterns around the structure.

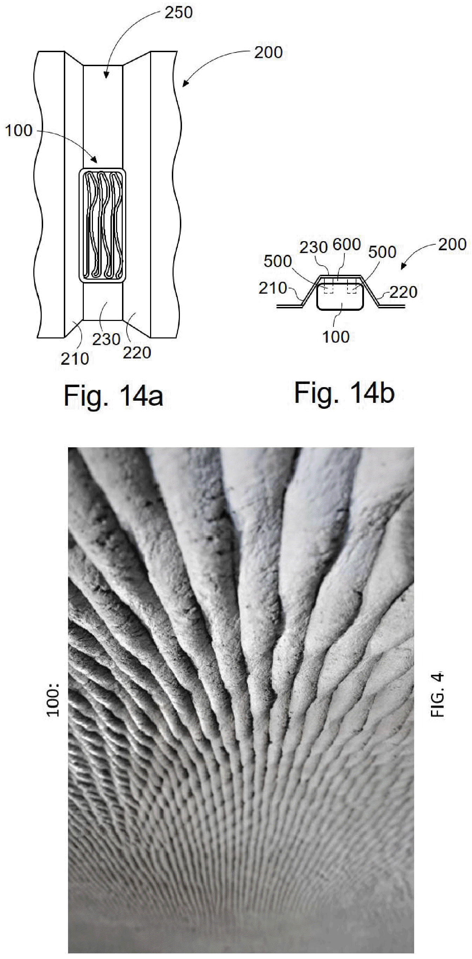

FIG. 4 illustrates a structure 100 suitable for organisms. This figure showcases a specific design aimed at maximizing ecological benefits.

The structure 100 illustrated is especially ideal for being a habitat for aquatic organisms since the texture of the structure 100 has a high surface complexity to recruit algae, vascular plants, and other organisms. The intricate surface design provides numerous attachment points and microhabitats for various marine species.

3D printed concrete is unique for this purpose since it already has a rough texture and further has an undulating layering. This manufacturing method allows for the creation of complex surface textures that mimic natural reef structures.

The structure 100 illustrated is especially ideal for being a habitat for aquatic animals since the design is made to have a high structural complexity for, e.g., fish and other animals. The structure includes various cavities, overhangs, and passages that can serve as shelter or breeding areas for different species.

The structure 100 is configured to double as shaped and sized to fit within the sheet pile indentation while providing maximum ecological benefit.

**It** is an advantage to benefit from the properties of the 3D printed structures to make varied cavities and surfaces along the entire structure. This manufacturing method allows for the creation of complex, nature-inspired designs that would be difficult or impossible to achieve with traditional manufacturing methods.

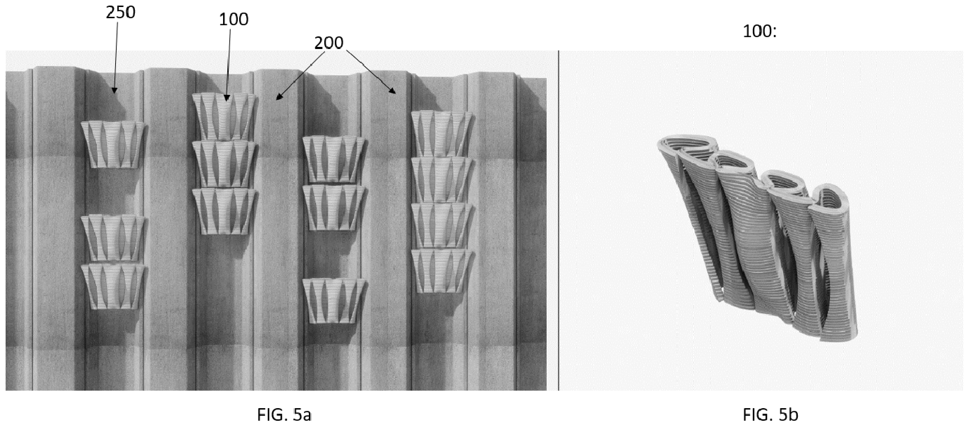

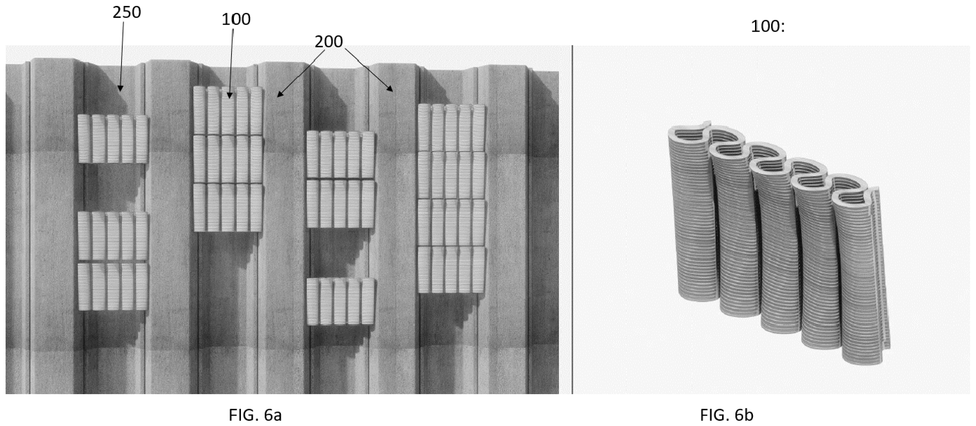

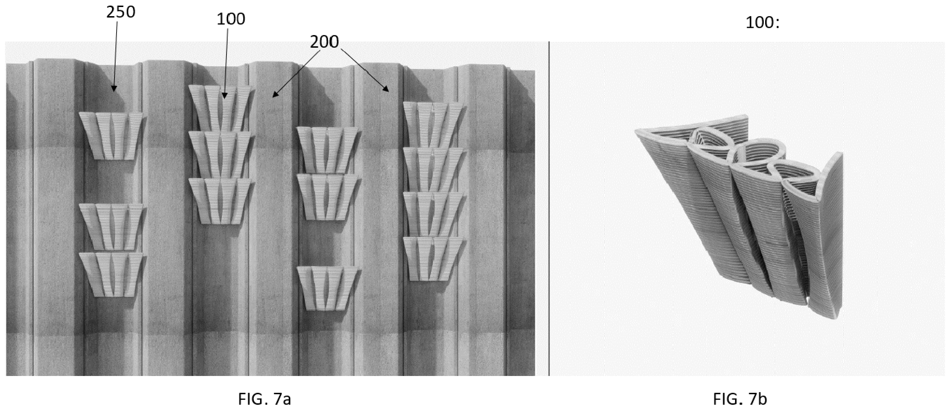

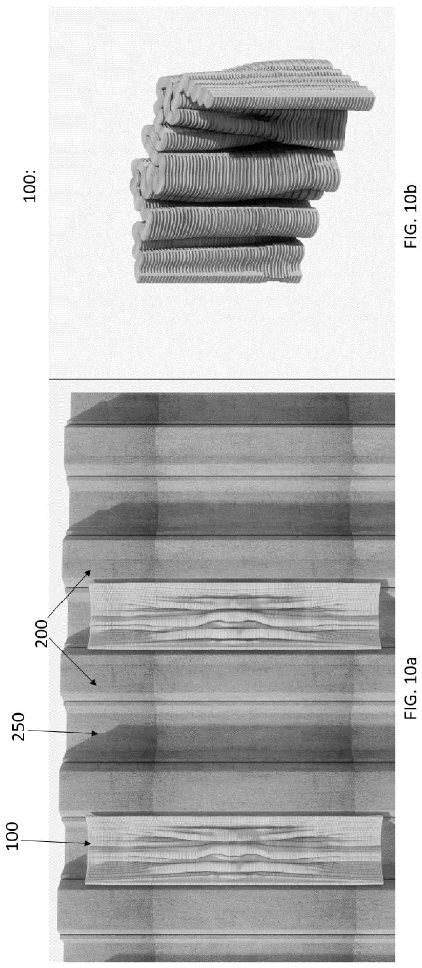

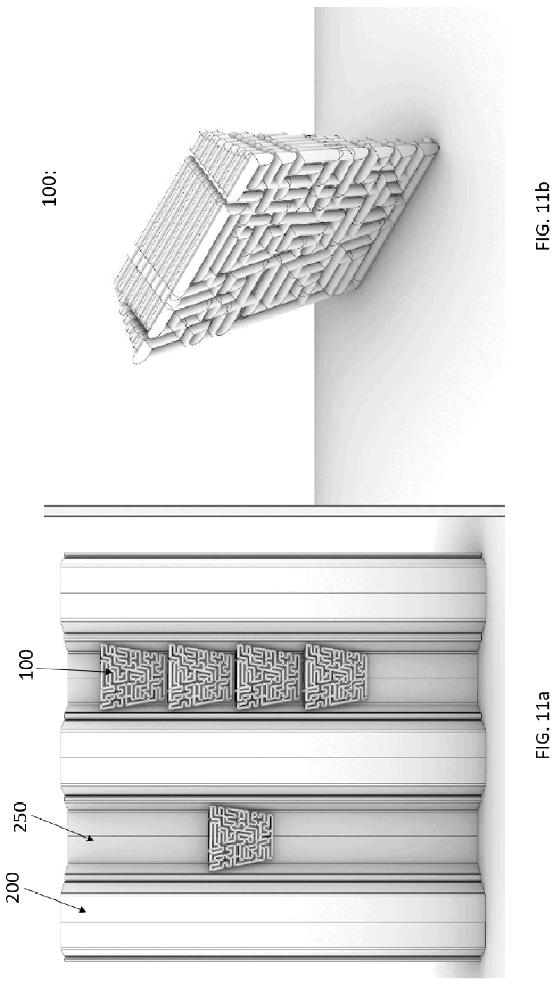

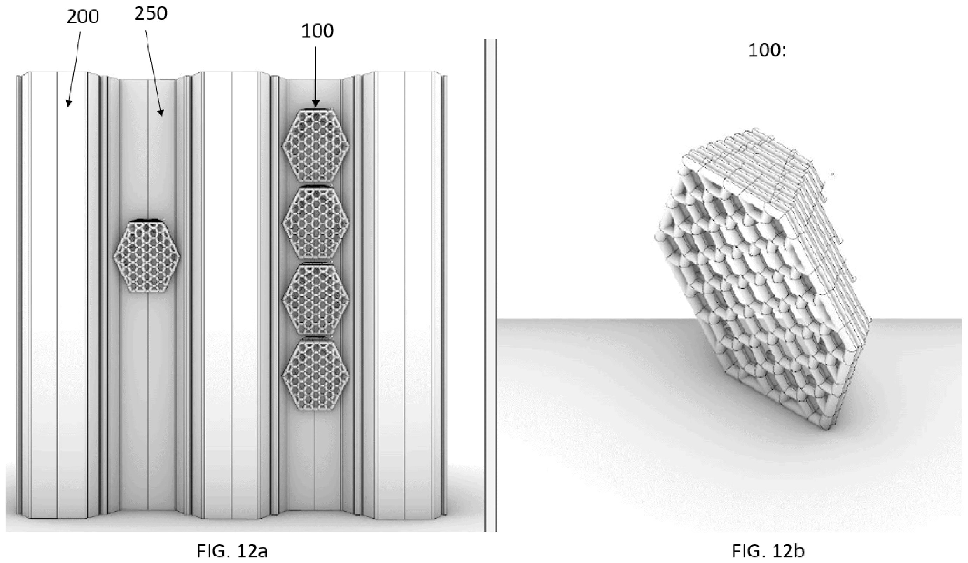

FIG. 5 to 12 illustrate a plurality of examples of specific embodiments of structures. These figures showcase the versatility of the invention in creating diverse structural designs to suit various ecological needs and environmental conditions.

FIG. 5b, 6b, 7b, 8b, 9b, 10b, 11b, and 12b illustrate examples of structures in a 3D perspective not attached to one or more sheet piles 200. These views provide detailed insights into the complex geometries and surface features of each structure design.

FIG. 5a, 6a, 7a, 8a, 9a, 10a, 11a, and 12a illustrate examples of structures 100 in a front view perspective, wherein a plurality of structures is attached to one or more sheet piles 200 for creating an artificial reef. These views demonstrate how multiple structures can be arranged along sheet piles to create a comprehensive artificial reef system. The varied designs and arrangements shown in these figures illustrate the potential for creating diverse underwater habitats and enhancing marine biodiversity.

Several of the figures, particularly FIG. 5 through FIG. 9, illustrate structures 100 comprising one or more interconnected wave-like segments, each segment defining an alternating sequence of convex and concave surfaces. Adjacent segments are integrally connected along their longitudinal edges to form a continuous, undulating profile. The structures 100 include internal cavities or channels 400 extending along the length of each segment, configured to facilitate water flow, sediment accumulation, and marine life habitation. This wave-like design creates a hydrodynamically optimized artificial reef shape that promotes turbulence, biodiversity settlement, and nutrient mixing.

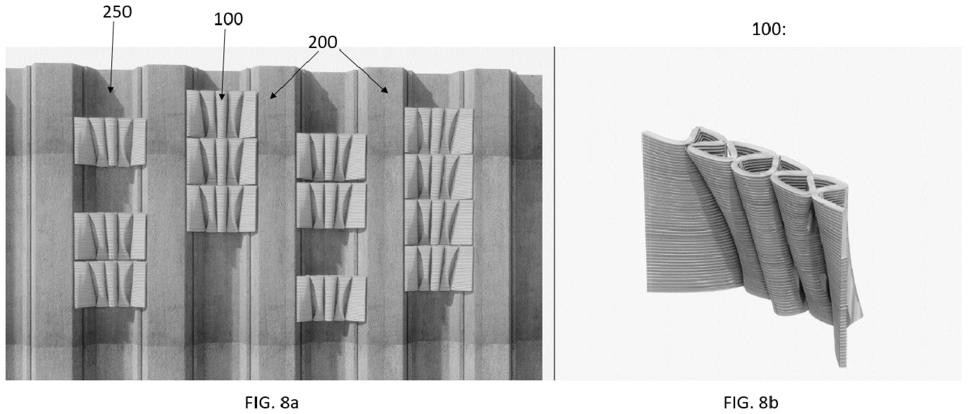

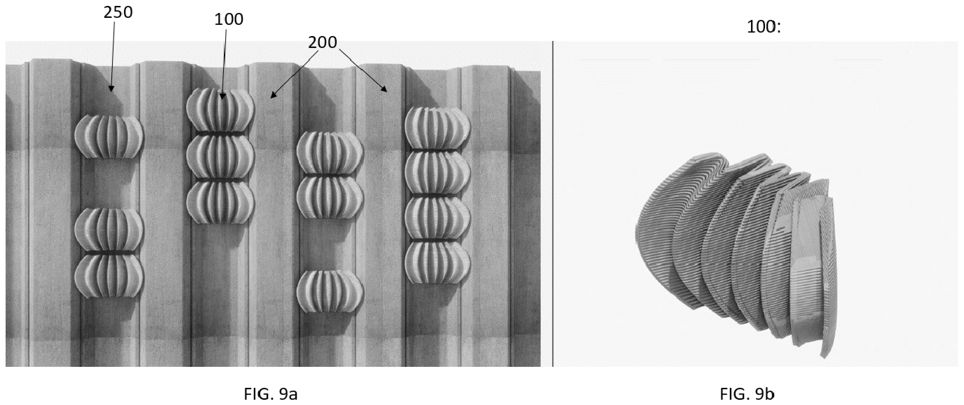

**In** other embodiments, particularly visible in FIG. 8 and FIG. 9, the structure 100 comprises a series of curved, overlapping segments arranged in a stacked configuration, each segment defining a concave and convex profile, forming an undulating, stepped structure. The segments are positioned at an angular offset relative to each other, creating internal passageways and cavities that facilitate water flow, sediment deposition, and marine life habitation. This arrangement promotes turbulence, nutrient circulation, and colonization by marine organisms, while the stepped design provides shelter and anchoring surfaces for coral growth.

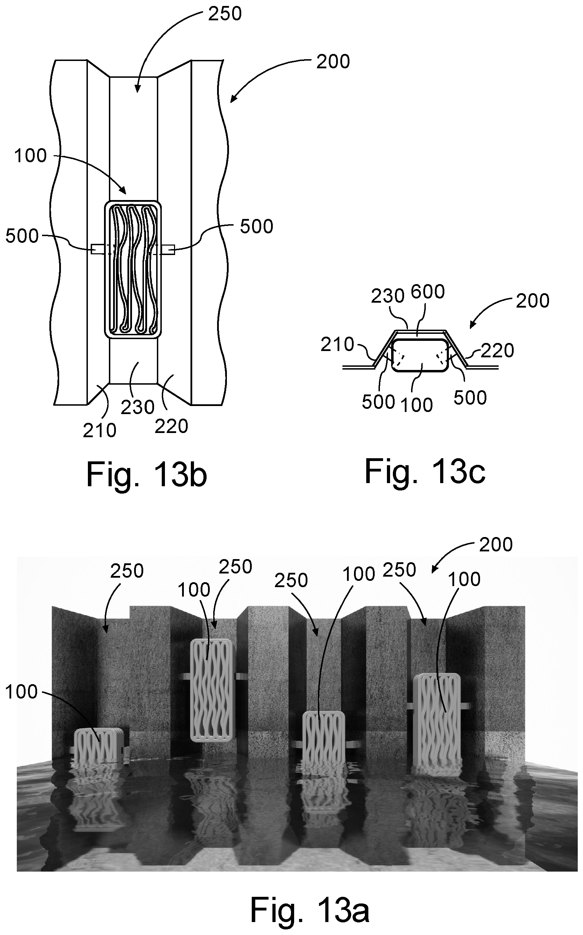

Fig. 13a illustrates a front view of an embodiment of a sheet pile wall provided with multiple structures 100. Fig. 13b shows a detailed front view of a section of the sheet pile wall from Fig. 13a, while Fig. 13c presents a top view of the sheet pile wall section and structure from Fig. 13b. These figures demonstrate how the assembly of underwater sheet piles 200 and attached structures 100 forms a comprehensive artificial reef system that enhances marine biodiversity while providing structural reinforcement to the sheet pile wall. The indentation (250) in the sheet pile is formed between a bottom web 230 of a row of sheet piles 200, a first side web 210 of the row of sheet piles 200, the first side web 210 extending obliquely or perpendicularly from a first edge of the bottom web 230, and a second side web 220 of the row of sheet piles 200 the second side web 220 extending obliquely or perpendicularly from a second edge of the bottom web 230 that is opposite to the first edge 210. The attachment means, such as a bracket 500 connecting a first lateral side of the structure 100 to the first side web 210 and the second lateral side 220 to the second side web 210 with a water passageway 600 between the bottom web 230 and the structure 100. One end of each of the two mounting brackets 500 is inserted in respective recesses in the first and second lateral sides of the structure 100. The recess is preferably formed during the additive manufacturing process of the structure 100. Thereupon, the structure with the brackets is placed in the indentation, and the other end of the two mounting brackets 500 is welded to the respective first and second side webs 210, 220.

Figure 14a shows a detailed front view of a section of the sheet pile wall that is a variation of the embodiment of Figure 13a, while Figure 14b presents a top view of this sheet pile wall section and structure. **In** this embodiment the attachment means (mounting bracket 500 or mounting brackets 500) connect the bottom web 230 with the structure 100. Hereto, one end of the respective bracket 500 is welded to the bottom web 230 with the other end of the bracket 500 inserted in a recess in the structure 100.

**In** embodiments, the structure 100 may comprise one or more interconnected wave-like segments, each segment defining an alternating sequence of convex and concave surfaces, wherein adjacent segments are integrally connected along their longitudinal edges to form a continuous, undulating profile. Preferably the structure 100 includes internal channels 400 extending along the length of each segment, configured to facilitate water flow, sediment accumulation, and marine life habitation.

**In** other embodiments the structure 100 comprises a series of curved, overlapping segments arranged in a stacked configuration, each segment defining a concave and convex profile, forming an undulating, stepped structure. The segments are preferably positioned at an angular offset relative to each other, creating internal passageways and cavities that facilitate water flow, sediment deposition, and marine life habitation.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims may possibly be advantageously combined, and the mentioning of these features in different claims does not exclude that a combination of features is possible and advantageous.

## Claims

1. An underwater sheet-pile assembly for forming an artificial reef, the assembly comprising:
one or more underwater sheet piles (200), the one or more underwater sheet piles (200) comprising an indentation (250);
a structure (100) arranged at least partly in the indentation (250); and
one or more attachment means (300) comprising at least one mounting bracket (500),
the at least one mounting bracket (500) attaching the structure (100) to the one or more underwater sheet piles (200),
wherein at least a portion of the structure (100) is made of a stone material, such as concrete, clay and/or cement,
wherein at least a portion of the structure (100) is additively manufactured,
wherein the at least one mounting bracket (500) holds the structure (100) relative to the one or more underwater sheet piles (200) such that, when mounted, a cavity (600) is provided behind the structure (100),
wherein the cavity (600) is provided between the structure (100) and the one or more underwater sheet piles (200) and/or between the at least one mounting bracket (500) and the one or more underwater sheet piles (200),
wherein the structure (100) has a length (L) and a cross-section varying throughout the length (L) of the structure (100), and
wherein the structure (100) has a cross-section comprising a plurality of cavities (400), the cavities (400) being open-ended (450) at least in a top (210) and/or a bottom (220) of the structure (100).

2. The underwater sheet-pile assembly according to claim 1, wherein the indentation (250) is a notch, groove, recess or hollow area formed by the
one or more underwater sheet piles (200).

3. The underwater sheet-pile assembly according to claim 1 or 2, wherein the one or more underwater sheet piles (200) comprise array-connected
underwater sheet piles (200), and
wherein the indentation (250) is formed by the array-connected underwater sheet piles (200).

4. The underwater sheet-pile assembly according to any of the preceding claims,
wherein the at least one mounting bracket (500) is adapted for being releasably attached to the structure (100) and/or for being releasably attached to the one or more underwater sheet piles (200).

5. The underwater sheet-pile assembly according to any of the preceding claims,
wherein the at least one mounting bracket (500) is adapted for mounting the structure (100) in an angled position relative to the one or more underwater sheet piles (200).

6. The underwater sheet-pile assembly according to any of the preceding claims,
wherein the at least one mounting bracket (500), when being mounted, provides:
a push force against a lower attachment point (520), and
a pull force from an upper attachment point (510).

7. The underwater sheet-pile assembly according to any of the preceding claims,
wherein the plurality of cavities (400) comprises cavities (400) having mutually different sizes and/or mutually different positions within the structure (100).

8. The underwater sheet-pile assembly according to any of the preceding claims,
wherein the cavities (400) are configured to allow underwater cultures to enter and exit areas in the structure (100).

9. The underwater sheet-pile assembly according to any of the preceding claims,
wherein the structure (100) comprises a rough texture and/or undulating layering formed by additive manufacturing.

10. The underwater sheet-pile assembly according to any of the preceding claims,
wherein the assembly comprises a plurality of structures (100) attached to one or more underwater sheet piles (200), and
wherein at least two of the plurality of structures (100) have mutually different forms, shapes, proportions and/or dimensions.

11. A method for attaching a structure (100) to one or more underwater sheet piles (200) for forming an artificial reef, the method comprising:
providing the structure (100),
wherein at least a portion of the structure (100) is made of a stone material, such as concrete, clay and/or cement,
wherein at least a portion of the structure (100) is additively manufactured,
wherein the structure (100) has a length (L) and a cross-section varying throughout the length (L) of the structure (100), and
wherein the structure (100) has a cross-section comprising a plurality of cavities (400), the cavities (400) being open-ended (450) at least in a top (210) and/or a bottom (220) of the structure (100);
providing at least one mounting bracket (500);
positioning the at least one mounting bracket (500) in an indentation (250) of the one or more underwater sheet piles (200);
attaching the at least one mounting bracket (500) to the one or more underwater sheet piles (200);
attaching the structure (100) to the at least one mounting bracket (500); and
arranging the structure (100) by means of the at least one mounting bracket (500) such that, when mounted, a cavity (600) is provided behind the structure (100),
wherein the cavity (600) is provided between the structure (100) and the one or more underwater sheet piles (200) and/or between the at least one mounting bracket (500) and the one or more underwater sheet piles (200).

12. The method according to claim 11, wherein the indentation (250) is an indentation (250) of a plurality of connected
underwater sheet piles (200).

13. The method according to claim 11 or 12, wherein the at least one mounting bracket (500) is positioned and/or configured such
that the structure (100) is mounted in an angled position relative to the one or more underwater sheet piles (200).

14. The method according to any of claims 11 to 13, wherein the at least one mounting bracket (500), when being mounted, provides:
a push force against a lower attachment point (520), and
a pull force from an upper attachment point (510).

15. The method according to any of claims 11 to 14, further comprising installing a plurality of structures (100) on one or more underwater
sheet piles (200),
wherein at least two of the plurality of structures (100) have mutually different forms, shapes, proportions and/or dimensions, and
wherein the method further comprises inoculating and/or at least partly coating at least one of the plurality of structures (100) with algae and/or any other marine organism.
